Europäisches Patentamt

European Patent Office

Office européen des brevets

(11) Veröffentlichungsnummer: **0 121 815**
**B1**

(12) **EUROPÄISCHE PATENTSCHRIFT**

(45) Veröffentlichungstag der Patentschrift:
06.08.86

(51) Int. Cl.⁴: **F 16 D 65/56, B 61 H 15/00**

(21) Anmeldenummer: **84102789.9**

(22) Anmeldetag: **14.03.84**

(54) **Selbsttätige, sofortwirkende Nachstellvorrichtung für den Anlegehub von Bremsgestängen von insbesondere Schienenfahrzeugen.**

(30) Priorität: 15.03.83 DE 3309265

(43) Veröffentlichungstag der Anmeldung:
17.10.84 Patentblatt 84/42

(45) Bekanntmachung des Hinweises auf die Patenterteilung:
06.08.86 Patentblatt 86/32

(84) Benannte Vertragsstaaten:
CH DE FR IT LI SE

(56) Entgegenhaltungen:
DE - A - 2 256 431
DE - A - 2 805 116
DE - A - 2 834 990
DE - A - 2 904 028
DE - A - 3 106 178
DE - B - 1 222 961
DE - B - 1 455 292
DE - B - 2 830 361

(73) Patentinhaber: **KNORR-BREMSE AG, Moosacher Strasse 80 Postfach 401060, D-8000 München 40 (DE)**

(72) Erfinder: **Bartlechner, Manfred, Am Katzenstein 1, D-8031 Wessling (DE)**

## Beschreibung

Die Erfindung bezieht sich auf eine selbsttätige, sofortwirkende Nachstellvorrichtung für den Anlegehub von Bremsgestängen von insbesondere Schienenfahrzeugen, mit zwei über ein selbsthemmungsfreies Gewinde miteinander verschraubten, spindel- bzw. mutterartig ausgebildeten Verschraubungsteilen, die im Bremskraftfluss durch die Nachstellvorrichtung angeordnet sind, und deren erstes Verschraubungsteil mittel- oder unmittelbar mit dem Bremsgestänge zur einen Seite der Nachstellvorrichtung verbunden und deren zweites Verschraubungsteil um zumindest einen Kupplungshub axialverschieblich und drehbar an einem mit dem Bremsgestänge zur anderen Seite der Nachstellvorrichtung verbundenen Gestängeteil gehalten ist, wobei das zweite Verschraubungsteil in Bremskraftrichtung über ein Drehlager gegen das Gestängeteil abgestützt ist und wobei zwischen das erste Verschraubungsteil und das Gestängeteil eine Vorspannfeder eingespannt ist, die diese beiden Teile entgegen ihrer Belastungsrichtung durch die Bremskraft gegeneinander verspannt, mit einer von der Bremskraft durchsetzbaren und unter Bremskraftbelastung geschlossenen, kombinierten Dreh- und Axialkupplung zwischen dem zweiten Verschraubungsteil und dem Gestängeteil, und mit einem im Lösezustand ein dem Soll-Anlegehub entsprechendes Anschlagspiel aufweisenden Steuerglied, das entgegen der Kraft einer am Gestängeteil abgestützten Steuerfeder relativ verschieblich zum Gestängeteil gelagert ist, wobei die Steuerfeder über das Steuerglied und eine diesem nachgeordnete Anschlagkupplung eine Drehkupplung für das zweite Verschraubungsteil in Schliessrichtung belastet.

Es sind sofortwirkende und nicht sofortwirkende Nachstellvorrichtungen bekannt. Bei sofortwirkenden Nachstellvorrichtungen wird ein übermässiger Anlegehub der Bremsen bereits während des Bremsenanlegens bei einer Bremsung nachgestellt, während nicht sofortwirkende Nachstellvorrichtungen den Überschussanteil des Anlegehubes über den Soll-Anlegehub während des Bremsenanlegens lediglich registrieren und erst beim nachfolgenden Bremsenlösen nachstellen.

Eine sofortwirkende Nachstellvorrichtung der eingangs genannten Art ist mit der DE-A-31 06 178 bekannt geworden. Bei dieser bekannten Nachstellvorrichtung wird ein hoher Wirkungsgrad für die zu übertragende Bremskraft angestrebt, d.h., die Nachstellvorrichtung soll die von einem Bremskraftmotor abgegebene Bremskraft möglichst vollständig an der nachgeordneten Reibungsbremse zur Wirkung gelangen lassen, also nur einen möglichst geringen Anteil dieser Bremskraft beispielsweise zum Spannen in ihr enthaltener Federn selbst verbrauchen.

Bei sofortwirkenden Nachstellvorrichtungen der vorstehend erwähnten, bekannten Bauart und ebenso bei anderen, ähnlichen Bauarten, beispielsweise gemäss der DE-C-2830361, ist die im Bremskraftfluss durch die Nachstellvorrichtung angeordnete Dreh- und Axialkupplung für das eine Verschraubungsteil im Lösezustand der Bremse geöffnet, sie wird erst während des Einbremsenvorganges geschlossen. Das Schliessen dieser Dreh- und Axialkupplung benötigt einen bestimmten, vom Bremskraftmotor aufzubringenden Hubweg, welcher in der Nachstellvorrichtung verbraucht wird und somit nicht mehr zum Zuspannen der Bremse zur Verfügung steht.

Bei nicht sofortwirkenden Nachstellvorrichtungen ist es bekannt, im Bremskraft-Übertragungsweg eine auch im Lösezustand der Bremse geschlossene Dreh- und Axialkupplung für ein Verschraubungsteil vorzusehen, so dass diese Nachstellvorrichtungen während des Bremsenanlegens keinen vom Bremskraftmotor aufzubringenden Hubweg für das Umschalten dieser Kupplung verbrauchen. Eine derartige, nicht sofortwirkende Nachstellvorrichtung ist beispielsweise aus der DE-C-1 222961 bekannt.

Für Nachstellvorrichtungen ist es allgemein bekannt, dem Steuerglied einen vom Bremsgestänge bewegbaren Übersetzungshebel zur Kraft- oder Wegübersetzung zuzuordnen; beispielsweise zeigen die DE-B-1455292 sowie die DE-A-2904028 derartige Übersetzungshebel. Aus letzterer Druckschrift ist es weiterhin bekannt, bei bestimmten Konstruktionen von Nachstellvorrichtungen den Übersetzungshebel als ein Verschraubungsteil umgebende, radial gerichtete Hebelanordnung, beispielsweise in Form einer gegebenenfalls radial geschlitzten Kegelringscheibe, auszubilden.

Der Erfindung liegt die Aufgabe zugrunde, eine selbsttätige, sofortwirkende Nachstellvorrichtung der eingangs angegebenen Art derart auszugestalten, dass die von der Bremskraft durchsetzte Dreh- und Axialkupplung für das eine Verschraubungsteil bereits bei gelösten Bremsen geschlossen ist, während des Einbremsvorganges also nicht unter Verbrauch eines bestimmten, von einem Bremskraftmotor aufzubringenden Hubweganteils geschlossen werden muss. Zusätzlich soll die zu schaffende Nachstellvorrichtung einen möglichst einfachen, nur wenige Bauteile erfordernden Aufbau aufweisen.

Diese Aufgabe wird nach der Erfindung für eine selbsttätige, sofortwirkende Nachstellvorrichtung der eingangs angegebenen Art durch eine Ausbildung gemäss den im kennzeichnenden Teil des Patentanspruches 1 angegebenen Merkmalen gelöst.

Weitere gemäss der Erfindung vorteilhafte Ausgestaltungsmöglichkeiten für die selbsttätige, sofortwirkende Nachstellvorrichtung sind den Unteransprüchen entnehmbar.

In den Zeichnungen sind Ausführungsbeispiele für nach der Erfindung ausgebildete Nachstellvorrichtungen schematisch dargestellt, und zwar zeigt

Figur 1 die Einordnung der Nachstellvorrichtung in ein zangenartiges Scheibenbremsgestänge,

Figur 2 und 3 jeweils Halbschnitte durch zwei Ausführungsformen der Nachstellvorrichtung, die insbesondere für eine Verwendung in einem Bremsgestänge nach Fig. 1 vorgesehen sind,

Figur 4 einen Halbschnitt durch eine in einen Bremszylinder eingebaute Nachstellvorrichtung und

Figur 5 eine Einzelheit.

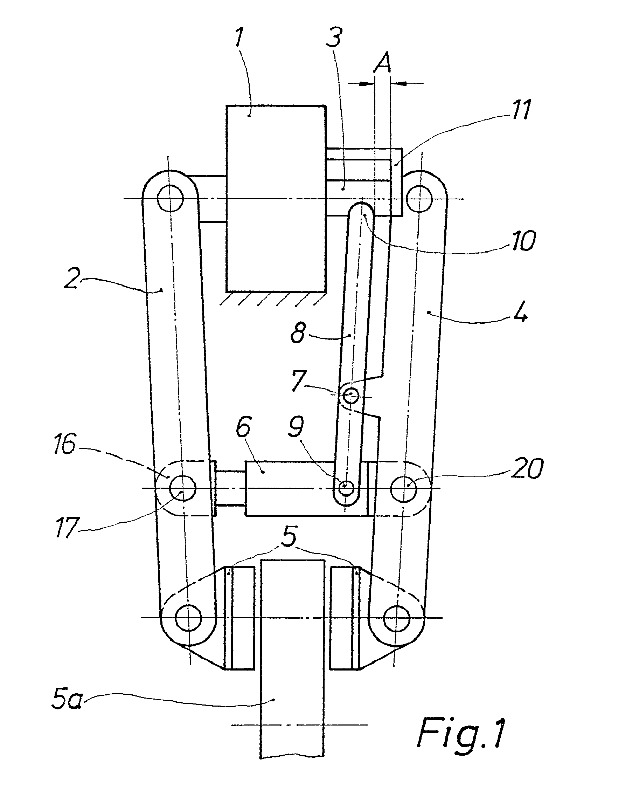

In Fig. 1 ist ein am Rahmen eines insgesamt nicht dargestellten Schienenfahrzeuges zu halternder Bremszylinder 1 dargestellt, an dessen Gehäuse das Ende eines Bremshebels 2 und an dessen Kolbenstange 3 das Ende eines weiteren Bremshebels 4 angelenkt ist. Andererseits tragen die beiden Bremshebel 2 und 4 in üblicher Weise angelenkte Bremsbacken 5, zwischen welche eine abzubremsende, einem im übrigen nicht dargestellten Radsatz des Schienenfahrzeuges zugehörenden Bremsscheibe 5a eingreift. Nahe der Bremsscheibe 5a sind die beiden zueinander annähernd parallel verlaufenden Bremshebel 2 und 4 mittels einer zugstangenartigen Nachstellvorrichtung 6 miteinander gelenkig verbunden, die Bremshebel 2 und 4 stellen also Bremsgestänge zu beiden Seiten der Nachstellvorrichtung dar. Der Bremshebel 4 weist in seinem Bereich zwischen der Nachstellvorrichtung 6 und dem Bremszylinder 1 eine Lagerstelle 7 auf, an welcher ein zum Bremshebel 4 im wesentlichen parallel verlaufender Übersetzungshebel 8 angelenkt ist. Das eine Ende des Übersetzungshebels 8 ist vermittels einer Lagerung 9 an einem in Fig. 1 nicht gesondert dargestellten Steuerglied der Nachstellvorrichtung 6 angelenkt und das andere Ende 10 des Übersetzungshebels 8 steht mit einem Abstand A einem mit dem Gehäuse des Bremszylinders 1 verbundenen Anschlagteil 11 gegenüber. Im dargestellten Lösezustand der Bremse mit dem Abstand A zwischen dem Ende 10 und dem Anschlagteil 11 befinden sich die Bremsbacken 5 in einer um einen Soll-Anlegehub von der Bremsscheibe 5a abgehobenen Lage. Die Fig. 1 zeigt insoweit ein übliches Zangenbremsengestänge für eine Scheibenbremse.

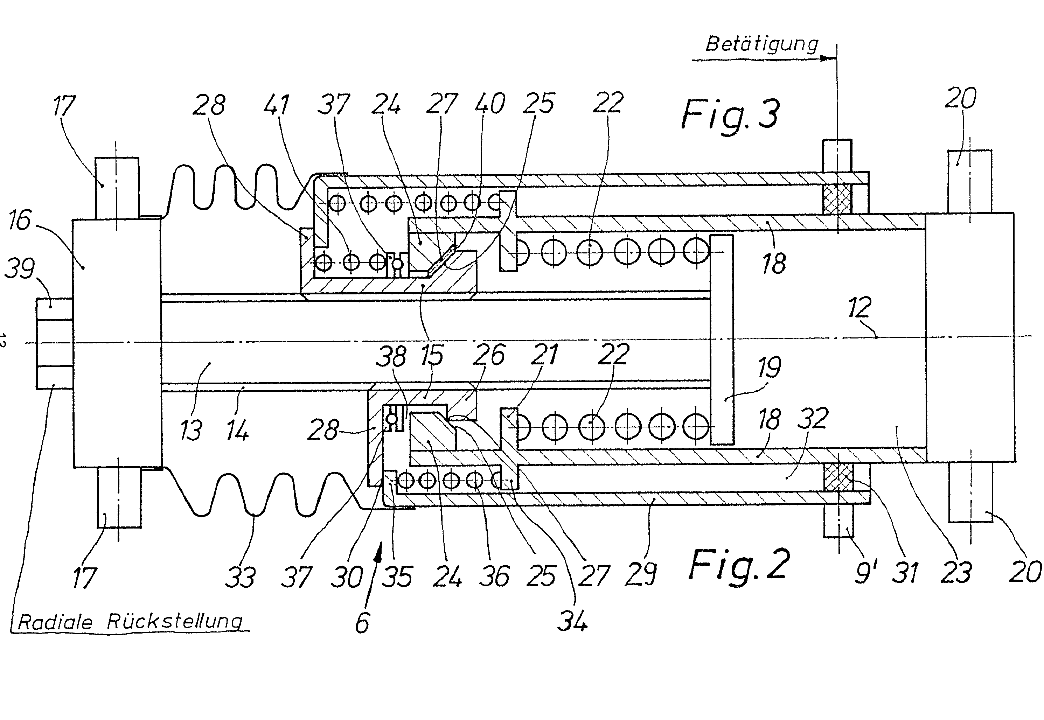

Gemäss der sich bis zur Mittelachse 12 erstreckenden Fig. 2 weist die Nachstellvorrichtung 6 eine Gewindespindel 13 und eine auf dieser mittels eines nichtselbsthemmenden Gewindes 14 verschraubte Mutter 15 auf. Das eine Ende der Gewindespindel 13 ist über eine Rückstellvorrichtung nur beim später zu erläutenden Rückstellen drehbar, sonst jedoch drehfest mit einem Lagerteil 16 verbunden; die Rückstellvorrichtung kann in ihrem Aufbau beispielsweise der DE-A-2256431 entsprechen und braucht daher hier in ihrem Aufbau und ihrer Funktionsweise nicht weiter erläutert zu werden. Das Lagerteil 16 trägt beiderseits Lagerzapfen 17, mit welchen es, wie auch aus Fig. 1 ersichtlich, am es gabelförmig umgreifenden Bremshebel 2 angelenkt ist. Mit ihrem anderen Ende greift die Gewindespindel 13 in ein rohrartiges Gestängeteil 18 ein, in welchem es mit einem Federteiler 19 endet. Das Gestängeteil 18 trägt an seinem der Gewindespindel 13 abgewandten Ende beidseitig den Lagerzapfen 17 entsprechende Lagerzapfen 20, mit welchen es entsprechend dem Lagerteil 16 am Bremshebel 4 angelenkt ist.

Nahe seines den Lagerzapfen 20 abgewandten Endes ist das Gestängeteil 18 mit einem Innenflansch 21 versehen, zwischen diesem Innenflansch 21 und dem Federteller 19 ist eine die Gewindespindel 13 umgebende Vorspannfeder 22 eingespannt; die Vorspannfeder 22 sucht also die Gewindespindel 13 in den Innenraum 23 des Gestängeteils 18 hineinzuziehen. Mit seinem einen eingezogenen Kupplungsflansch 24 tragenden Ende übergreift das Gestängeteil 18 einen zylindrischen Mittelabschnitt der Mutter 15, der Kupplungsflansch 24 weist eine dem Innenraum 23 des Gestängeteiles 18 zugewandte, konische Kupplungsfläche 25 auf. Die Mutter 15 endet im Innenraum 23 mit einem radialen Flansch 26, der eine der Kupplungsfläche 25 gegenüberstehende Kupplungsfläche 27 bildet und zusammen mit dieser eine kombinierte Dreh- und Axialkupplung 25, 27 bildet. Ausserhalb des Gestängeteiles 18 endigt die Mutter 15 mit einem radial auskragenden Anschlagflansch 28, an welchem von seiten des Gestängeteiles 18 her ein Steuerglied 29 mit seinem Ende unter Bilden einer Anschlagkupplung 30 anliegt. Das rohrartige Steuerglied 29 übergreift das Gestängeteil 18 und ist auf diesem axialverschieblich gelagert; am der Mutter 15 abgewandten Ende dichtet ein Dichtring 31 den Ringspalt 32 zwischen dem Steuerglied 29 und dem Gestängeteil 18 ab.

Nahe der Lagerzapfen 20 trägt das Steuerglied 29,an gegenüberliegenden Stellen zwei der Lagerung 9 zugehörende Lagerzapfen 9', mit welchen es in Bohrungen am es gabelartig umgreifenden Ende des Übersetzungshebels 8 gelagert ist. Andererseits erstreckt sich zum Schutz der Nachstellvorrichtung vor innerer Verschmutzung ein Faltenbalg 33 vom Steuerglied 29 zum Lagerteil 16. Das Gestängeteil 18 trägt etwa im Bereich des Innenflansches 21 einen in den Ringspalt 32 zum Gestängeteil ragenden Flansch 34, zwischen welchem und einem nahe der Anschlagkupplung 30 befindlichen, eingezogenen Flansch 35 des Steuergliedes 29 eine Steuerfeder 36 eingespannt ist. Die Steuerfeder 36 ist kräftiger als die Vorspannfeder 22. Zwischen dem Kupplungsflansch 24 und dem Anschlagflansch 28 ist auf der Mutter 14 ein Drehlager 37 gelagert, wobei zwischen dem Kupplungsflansch 24 und dem Anschlagflansch 28 bei geschlossener Dreh- und Axialkupplung 25, 27 ein dem Öffnungshub dieser Dreh- und Axialkupplung entsprechendes Axialspiel 38 verbleibt.

Bei gelöster Bremse, wie in Fig. 1 dargestellt, nimmt die Nachstellvorrichtung mit ihren Einzelteilen die aus Fig 2 ersichtliche Schaltstellung ein. Die Dreh- und Axialkupplung 25, 27 ist unter der überwiegenden Kraft der Steuerfeder 36 ebenso wie die Anschlagkupplung 30 geschlossen, die Mutter 15 ist damit über das vermittels der Lagerzapfen 20 drehfest am Bremshebel 4 gehaltene Gestängeteil 18 ebenso wie die Gewindespindel 13 ihrerseits am Bremshebel 2 drehfest gehalten.

Wird zum Bremsen der Bremszylinder 1 mit einem Druckmittel beaufschlagt, so schiebt sich die Kolbenstange 3 aus dem Bremszylinder 1 heraus und die Bremshebel 2 und 4 werden an ihren bremszylinderseitigen Enden auseinandergespreizt. Die beiden Bremshebel 2 und 4 drehen sich anschliessend um die Lagerzapfen 17 und 20, bis nach Überwinden des Anlegehubes die Bremsbacken 5 an der Bremsscheibe 5a zur Anlage gelangen. Bei richtig eingestelltem Soll-Anlagehub gelangt gerade zu diesem Zeitpunkt das Ende 10 zur Anlage am Anschlagteil 11, da mit der Drehung des Bremshebels 4 über die Lagerstelle 7 der Übersetzungshebel 8 verstärkt um seine Lagerung 9 gedreht wird. Anschliessend wird beim Aufbau einer Zuspannkraft für die Bremse, d.h. einer Anpresskraft der Bremsbacken 5 an die Bremsscheibe 5a, über die Lagerzapfen 17 und 20 in die Nachstellvorrichtung 6 eine Zugbeanspruchung eingeleitet.

Während des Anlegehubes verbleibt die Nachstellvorrichtung 6 in ihrer aus Fig. 2 dargestellten Schaltstellung, in welcher beide Verschraubungsteile, Gewindespindel 13 und Mutter 15, gegen Drehungen arretiert sind und die Nachstellvorrichtung somit gegen Abstandsänderungen zwischen den Lagerzapfen 17 und 20 verriegeln. Unmittelbar nach Überschreiten des Anlegezustandes der Bremsen wird bei weiter aus dem Bremszylinder 1 ausfahrender Kolbenstange 3 der Übersetzungshebel 8 um die Anlagestelle seines Endes 10 am Anschlagteil 11 durch die sich weiterbewegende Lagerstelle 7 gemäss Fig. 1 entgegen dem Uhrzeigersinn gedreht, wobei über die Lagerung 9 das Steuerglied 29 relativ zum Gestängeteil 18 gemäss Fig. 2 nach rechts, entgegen der Kraft der Steuerfeder 36, verschoben wird. Die Anschlagkupplung 30 öffnet sich dabei, doch vermag die Vorspannfeder 22 gegen die ihre Vorspannkraft übersteigende, sich rasch aufbauende Zugbeanspruchung der Nachstellvorrichtung 6 durch die sich ebenfalls rasch aufbauende Zuspannkraft der Bremse die Gewindespindel 13 nicht weiter in den Innenraum 23 des Gestängeteiles 18 hineinzuziehen; die Dreh- und Axialkupplung 25, 27 bleibt also geschlossen und über diese Dreh- und Axialkupplung wird die Zugbeanspruchung in der Nachstellvorrichtung 6 vom Gestängeteil 18 über die drehfest verriegelte Mutter 15 auf die Gewindespindel 13 übertragen. Die Nachstellvorrichtung erfährt hierbei keinerlei Längenänderung, so dass kein Hubweganteil des Bremszylinders 1 für Kupplungsschaltvorgänge in der Nachstellvorrichtung 6 verbraucht wird, sondern voll, unter elastischer Verspannung der Bremshebel 2 und 4 sowie der Bremsbacken 5, in Zuspannkraft für die Bremse umgesetzt wird. Bis zum Erreichen der maximalen Zuspannkraft für die Bremse ändert sich hieran nichts.

Beim Bremsenlösen spielen sich entsprechend umgekehrte Vorgäng ab, wobei bis zum Erreichen des vollen Lösezustandes die Dreh- und Axialkupplung 25, 27 ständig geschlossen bleibt und somit auch kein Schalthub von der oder für die Nachstellvorrichtung benötigt wird.

Falls, beispielsweise durch vorangehenden Verschleiss, ein den Soll-Anlegehub übersteigender Anlegehub für die Bremsbacken 5 an die Bremsscheibe 5a vorhanden ist, so gelangt das Ende 10 des Übersetzungshebels 8 am Anschlagteil 11 zur Anlage, bevor die Bremsbacken 5 an der Bremsscheibe 5a anliegen. Beim weiteren Einbremsen wird, wie vorstehend beschrieben, über den Übersetzungshebel 8 das Steuerglied 29 relativ zum Gestängeteil 18 gemäss Fig. 2 nach rechts verschoben. Mangels einer sich aufbauenden Bremszuspannkraft ist jedoch auch die Nachstellvorrichtung 6 von Zugbeanspruchungen noch weitgehend entlastet, so dass die Vorspannfeder 22 unter gegenseitiger Annäherung der Lagerzapfen 17 und 20 die Gewindespindel 13 in das Gestängeteil 18 hineinzuziehen vermag; dabei öffnet sich die Dreh- und Axialkupplung 25, 27 durch geringe Verschiebung der Mutter 15 nach rechts, bis sie über das Drehlager 37 am Kupplungsflansch 24 drehbar abgestützt wird. Bei der Weiterbewegung der Gewindespindel 13 verschraubt sich die Mutter 15 unter Drehung relativ zur Gewindespindel 13 nach links. Dieser Vorgang hält an, bis durch Verringern des Abstandes zwischen den Lagerzapfen 17 und 20 die beiden Bremshebel 2 und 4 um ihre Anlenkungen am Bremszylinder derart verdreht sind, dass die Bremsbacken 5 zur Anlage an der Bremsscheibe 5a gelangen. Damit ist der Überschussanteil des Anlegehubes, bezogen auf die Grösse des Soll-Anlegehubes, während des Anlegevorganges der Bremse nachgestellt. Sobald, nach Anlegen der Bremse, die Nachstellvorrichtung wie vorstehend beschrieben über die Bremshebel 2 und 4 von sich rasch vergrössernden Zugbeanspruchungen belastet wird, wird die Kraft der Vorspannfeder 22 überwunden, durch geringe Verschiebung der Gewindespindel 13 relativ zum Gestängeteil 18 wird die Dreh- und Axialkupplung 25, 27 geschlossen und damit die Mutter 15 an weiterer Drehung und damit Verschraubung auf der Gewindespindel 13 gehindert. Der weitere Bremsvorgang und auch das nachfolgende Lösen erfolgen wie bereits vorstehend beschrieben.

Zum Rückstellen, d.h. Verlängern der Nachstellvorrichtung 6, wie es beispielsweise bei Austausch verschlissener gegen neue Bremsbacken 5 erforderlich ist, wird die Gewindespindel 13 unter Ausschalten oder Überwinden der Drehhemmung der im Lagerteil 16 angeordneten Rückstellvorrichtung über einen Sechskantansatz 39 derart gedreht, dass sie sich relativ zur Mutter 15 gemäss Fig. 2 nach links, also aus dem Gestängeteil 18 herausschraubt.

Bei der Nachstellvorrichtung nach Fig. 2 ist die Dreh- und Axialkupplung 25, 27 als unverzahnte Konuskupplung ausgebildet. Falls diese Dreh- und Axialkupplung 25, 27 verzahnt ausgebildet werden soll, wodurch eine gesteigerte Drehsicherung für die Mutter 15 bei verringerten Schliess- und damit Federkräften möglich ist, ist es zweckmässig, die Nachstellvorrichtung gemäss Fig. 3 auszugestalten. Bei der Nachstellvorrichtung gemäss Fig. 3 ist die Dreh- und Axialkupplung 25, 27 verzahnt mit vorzugsweise abgeschrägten, überratschbaren Zähnen 40 ausgebildet. Weiterhin ist der Abstand zwischen dem Kupplungsflansch 24 und dem Anschlagflansch 28 vergrössert; zwischen dem am Kupplungsflansch 24 anliegenden, auf der Mutter 15 verschieblich gelagerten Drehlager 37 und dem Anschlagflansch 28 ist eine Feder 41 eingespannt, die schwächer ist als die Vorspannfeder 22. Im übrigen entspricht der Aufbau der Nachstellvorrichtung nach Fig. 3 demjenigen der Nachstellvorrichtung nach Fig. 2 und braucht daher nicht weiter beschrieben zu werden.

Auch die Funktionsweise der Nachstellvorrichtung nach Fig. 3 entspricht der vorstehend beschriebenen Funktionsweise der Nachstellvorrichtung nach Fig. 2, lediglich beim Nachstellvorgang eines übermässigen Anlegehubes durch von der Vorspannfeder 22 bewirktes Hineinziehen der Gewindespindel 13 in das Gestängeteil 18 öffnet sich die Dreh- und Axialkupplung 25, 27 entgegen der Kraft der Feder 41 nur soweit, dass die Zähne 40 beim Drehen der Mutter 15 gerade übereinander hinweggratschen können; die Kraft der Feder 41 ist also derart zu bemessen, dass sie ausreicht, die Mutter 15 entgegen dem Bewegungswiderstand auf dem nicht selbsthemmenden Gewinde 14 zu verschrauben. Nach Beendigen des Nachstellvorganges bewirkt die Feder 41 ein sofortiges Schliessen der Dreh- und Axialkupplung 25, 27, so dass auch in diesem Falle ohne Schalthubverlust die Weiterbewegung des Gestängeteiles 18 sofort über die Dreh- und Axialkupplung 25, 27 und die Mutter 15 auf die Gewindespindel 13 übertragen, das Gestängeteil 18 mit der Gewindespindel 13 also unverlängerbar gekoppelt wird.

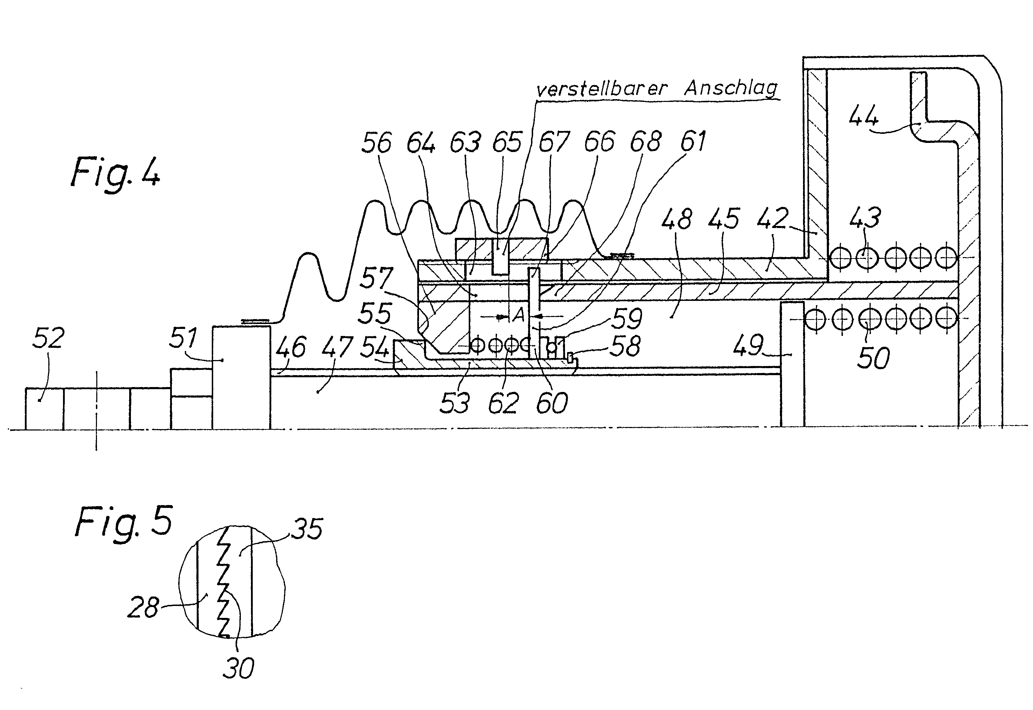

Bei der Anordnung eines Bremsgestänges gemäss Fig. 1 wird das Steuerglied 29 vermittels der Lagerung 9 über den Übersetzungshebel 8 undrehbar festgehalten. Es kann zweckmässig sein, diese Undrehbarkeit des Steuergliedes 29 als zusätzliche Sicherung gegen ungewollte Drehungen der Mutter 15 dadurch auszunutzen, dass die Anschlagkupplung 30 durch einseitig abgeschrägte Verzahnung, wie sie im vergrösserten Massstab in Fig. 5 dargestellt ist, zusätzlich als Drehkupplung ausgebildet wird. Diese zusätzliche Drehsicherung für die Mutter 15 durch Verzahnen der Anschlagkupplung ermöglicht, die Steuerfeder 36 wesentlich schwächer als in den vorstehend beschriebenen Ausführungsbeispielen zu bemessen; selbst wenn die Steuerfeder 36 schwächer als die Vorspannfeder 22 wird, was beispielsweise durch Erlahmen oder auch entsprechende Wahl der Steuerfeder 36 erfolgen kann, genügt die von der Steuerfeder 36 ausgeübte, geringe Schliesskraft für die Anschlagkupplung 30, deren Verzahnung in Eingriff zu halten und über die steilen Zahnflankenseiten ein Drehen der Mutter 15 in Verschraubungsrichtung relativ zur Gewindespindel 13 nach links, wie es durch die Kraft der Vorspannfeder 22 bewirkt werden könnte, auszuschliessen.

Die Erfindung ist nicht nur für durch Zugbeanspruchungen belastete Nachstellvorrichtungen gemäss den vorstehend beschriebenen Ausführungsbeispielen, sondern auch für durch die Bremskraft in Druckrichtung beanspruchte Nachstellvorrichtungen geeignet. Beim Ausführungsbeispiel nach Fig. l4 ist die Nachstellvorrichtung in einen Bremszylinder eingeordnet und wird von der Bremskraft in Druckrichtung, d.h. Verkürzungsrichtung der Nachstellvorrichtung, beansprucht.

Gemäss Fig. 4 ist in einem festen Bremszylindergehäuse 42 ein entgegen einer Rückstellfeder 43 druckmittelbeaufschlagbarer Bremskolben 44 verschieblich gelagert. Seitens der Rückstellfeder 43 trägt der Bremskolben 44 in rohrartiges Gestängeteil 45, welches in einem es umschliessenden, ebenfalls rohrartigen Abschnitt des Bremszylindergehäuses 42 axialverschieblich geführt ist. Eine mit einem nichtselbsthemmenden Gewinde 46 versehene Gewindespindel 47 greift in den Innenraum 48 des Gestängeteiles 45 und endet dort mit einem Federteller 49. Zwischen dem Federteller 49 und dem Bremskolben 44 ist eine Vorspannfeder 50 eingespannt. Andererseits ist die Gewindespindel 47 über eine in einem Gehäuse 51 angeordnete Rückstellvorrichtung, welche in ihrem Aufbau und ihrer Funktion der zu den Ausführungsbeispielen nach Fig. 2 und 3 erwähnten Rückstellvorrichtung entsprechen kann und damit hier nicht weiter erläutert werden muss, mit einem üblichen Kolbenstangenkopf 52 zum Anlenken eines in Fig. 4 nicht dargestellten Bremsgestänges verbunden. Im Normalbetrieb wird die Gewindespindel 47 über die Rückstellvorrichtung und den Kolbenstangenkopf 52 vom Bremsgestänge undrehbar gehalten. Mit der Gewindespindel 47 ist eine Mutter 53 verschraubt, welche seitens des Gehäuses 51 einen auskragenden Flansch 54 mit den Bremskolben 44 zugewandter Kupplungsfläche 55 aufweist. Der Kupplungsfläche 55 steht eine an einem die Mutter 53 mit Spiel umfassenden Kupplungsflansch 56 angeordnete Kupplungsfläche 57 gegenüber; die beiden Kupplungsflächen 55 und 57 bilden eine Dreh- und Axialkupplung 55, 57. Der Kupplungsflansch 56 ist am dem Bremskolben 44 abgewandten Ende des Gestängeteiles 45 in Art eines nach radial innen weisenden Flanschringes fest angeordnet. Am dem Flansch 54 abgewandten Ende trägt die Mutter 53 einen beispielsweise als Sicherungsring 58 ausgebildeten Anschlag, an welchem von seiten des Flansches 54 ein auf der Mutter 53 gehaltenes Drehlager 59 anliegt. Am Drehlager 59 liegt das radialinnere Ende 60 eines sich von der Mutter 53 nach radialaussen erstreckenden Hebels 61 an, der Hebel 61 wird durch eine zwischen seinem Ende 60 und dem Kupplungsflansch 56 eingespannte, die Mutter 53 umgebende Steuerfeder 62 in seiner Lage gehalten. Das Ende 60 des Hebels 61 stellt ein Steuerglied für die Nachstellvorrichtung dar. Der zylindrische Abschnitt des Bremszylindergehäuses 42 sowie das Gestängeteil 45 weisen im Bereich der Mutter 53 einander wenigstens teilweise überdeckende Längsschlitze 63 bzw. 64 auf. In den Längsschlitz 63 des Bremszylindergehäuses 42 greift ein fest einstellbar am Bremszylindergehäuse 42 gehaltener Anschlag 65 ein, beispielsweise kann der Anschlag 65 als radial in eine auf den Bremszylindergehäuse 42 verschraubbare Anschlagmutter 66 einschraubbare und in den Längsschlitz 63 eingreifende Stiftschraube ausgebildet sein. Dem Anschlag 65 steht mit einem den Soll-Anlegehub der Bremse entsprechenden Abstand A auf seiten des Bremskolbens 44 das radial äussere Ende 67 des den Längsschlitz 64 des Gestängeteiles 45 durchragenden und in den Längsschlitz 63 eingreifenden Hebels 61 gegenüber. Seitens des Bremskolbens 44 endet der Längsschlitz 64 des Gestängeteiles 45 unmittelbar am Hebel 61, so dass dieser in seinem mittleren Bereich am Längsschlitzende 68 zur Anlage gelangen kann und dort um eine Querachse drehbar abstützbar ist.

Bei gelöster Bremse nimmt der Bremszylinder mit der Nachstellvorrichtung die aus Fig. 4 ersichtliche Lage ein. Die Rückstellfeder 43 hält den Bremskolben 44 in seiner rechten Endlage und die kräftiger als die Vorspannfeder 50 ausgebildete Steuerfeder 62 hält die Dreh- und Axialkupplung 55, 57 geschlossen. Zwischen dem Ende 67 des Hebels 61 und dem Anschlag 65 befindet sich der Abstand A.

Wird zum Bremsen der Bremskolben 44 druckmittelbeaufschlagt, so verschiebt er sich entgegen der Kraft der Rückstellfeder 43 nach links, wobei er das Gestängeteil 45 und mit diesem über die Dreh- und Axialkupplung 55, 57 die Mutter 53 undrehbar gekuppelt mitnimmt; durch die Mutter 53 wird auch die Gewindespindel 47 mit dem Kolbenstangenkopf 52 nach links bis zum Anlegen der Bremse mitgenommen. Bei richtig eingestelltem Anlegehub der Bremse gelangt gerade beim Anlegen der Bremse das Ende 67 des Hebels 61 zur Anlage am Anschlag 65. Bei der Weiterbewegung des Gestängeteiles 45 zum festen Zuspannen der Bremse wird das radialäussere Ende 67 des Hebels 61 vom Anschlag 65 festgehalten, während das Längsschlitzende 68 von der anderen Seite her den mittleren Bereich des Hebels 61 weiterbewegt; die Folge hiervon ist, dass sich der Hebel 61 um seine Anlage am Längsschlitzende 68 im Uhrzeigersinn dreht, wobei sein Ende 60 sich rascher als das Bremsgestängeteil 45 gemäss Fig. 4 nach links in Art eines Ausschwenkens bewegt. Das Ende 60 des Hebels 61 hebt sich somit unter Zusammendrücken der Steuerfeder 62 vom Drehlager 59 ab. Unabhängig von diesen Vorgängen wird jedoch die Verschiebebewegung des Gestängeteiles 45 über die geschlossene Dreh- und Axialkupplung 55, 57 auf die Gewindespindel 47 übertragen und die Bremse wird unter elastischem Verspannen des nicht dargestellten Bremsgestänges fest zugespannt.

Beim nachfolgenden Lösen spielen sich entsprechend umgekehrte Vorgänge ab, wobei die Dreh- und Axialkupplung 55, 57 ebenfalls ständig geschlossen bleibt; abschliessend wird die aus Fig. 4 ersichtliche Ausgangslage wieder erreicht. Es ist hervorzuheben, dass während des gesamten Brems- und Lösevorganges die Hubbewegung des Bremskolbens 44 über das Gestängeteil 45 vollständig und verlustfrei auf die Gewindespindel 47 übertragen wird, die Nachstellvorrichtung also keinerlei Schalthub für sich verbraucht.

Falls die Bremse im Lösezustand ein den Soll-Anlegehub übersteigendes Lüftungsspiel aufweist, gelangt während Einbremsvorgängen das Ende 67 des Hebels 61 am Anschlag 65 bereits zur Anlage, wenn die Bremse noch nicht angelegt ist.

Beim Weiterhub des Gestängeteiles 45 wird der Hebel 61 wie vorstehend beschrieben um das Längsschlitzende 68 verdreht, die Mutter 53 wird damit von der Kraft der Steuerfeder 62 entlastet. Nunmehr vermag die Vorspannfeder 50 die Gewindespindel 47 gemäss Fig. 4 nach links bis zum Anlegen der Bremse zu verschieben, wobei anfänglich durch geringfügige Mitnahme der Mutter 53 die Dreh- und Axialkupplung 55, 57 geöffnet wird, bis durch erneute Anlage des Drehlagers 59 am Ende 60 die Mutter 53 an seiner weiteren, axialen Verschiebung gehindert wird. Anschliessend wird die axial festgehaltene Mutter 53 durch die sich weiterbewegende Gewindespindel 47 in Drehung versetzt, wobei sich die Mutter 53 relativ zur Gewindespindel 47 nach rechts verschraubt. Damit wird der den Soll-Anlegehub übersteigende Überschussanteil des Anlegehubes der Bremse nachgestellt. Sobald die Bremse anliegt, wird durch den rasch anwachsenden Bewegungswiderstand die Gewindespindel 47 angehalten, bei der nachfolgenden Weiterbewegung des Gestängeteiles 45 schliesst sich die Dreh- und Axialkupplung 55, 57 wieder und sodann wird zum festen Zuspannen der Bremse die Weiterbewegung des Gestängeteiles 45 über die geschlossene Dreh- und Axialkupplung 55, 57 und die hierdurch drehfest gehaltene Mutter 53 wieder auf die Gewindespindel 47 übertragen. Das weitere Festziehen der Bremse und der nachfolgende Lösevorgang erfolgen wie bereits vorstehend beschrieben.

Im Vergleich der Nachstellvorrichtungen nach Fig. 1, 2 und Fig. 4 ergibt sich, dass der innerhalb des Gestängeteiles 45 befindliche Abschnitt des ein dem Bremshebel 4 vergleichbar an die Nachstellvorrichtung anschliessendes Bremsgestängeteil darstellenden Bremskolbens 44 dem Innenflansch 21 vergleichbar ist. Der Kolbenstangenkopf 52 kann bereits dem andersseitigen Bremsgestänge zugerechnet werden. Die abhebbare Anlage des Endes 60 des Hebels 61 am Drehlager 59 stellt einen der Anschlagkupplung 30 vergleichbaren Anschlag 60/59 dar, und der Hebel 61 beinhaltet die Übersetzungsfunktion des Übersetzungshebels 8. Der Sicherungsring 58 ist dem Anschlagflansch 28 vergleichbar.

Zum Rückstellen der Nachstellvorrichtung beim Tausch der verschlissenen gegen neue Bremsbeläge an der Bremse kann über die im Gehäuse 51 untergebrachte Rückstellvorrichtung die Gewindespindel 47 derart gedreht werden, dass sie sich relativ zur Mutter 53 gemäss Fig. 4 nach rechts, also in den Innenraum 48 hinein verschraubt.

Es ist zweckmässig, nicht nur einen Hebel 61 vorzusehen, sondern über den Umfang der Mutter 53 gleichmässig verteilt wenigstens drei derartige Hebel vorzusehen. Es ist auch möglich, diese Hebel durch in Umfangsrichtung umlaufende Stege miteinander zu verbinden, so dass die Hebel mit den erwähnten Stegen eine radial nicht ganz durchgehend geschlitzte Ringscheibe bilden; beim Verdrehen der Hebel wird die Ringscheibe in die Form eines Kegelmantelabschnittes elastisch verformt.

*Bezugszeichenliste*

| | |
|---|---|
| 1 | Bremszylinder |
| 2 | Bremshebel |
| 3 | Kolbenstange |
| 4 | Bremshebel |
| 5 | Bremsbacken |
| 5a | Bremsscheibe |
| 6 | Nachstellvorrichtung |
| 7 | Lagerstelle |
| 8 | Übersetzungshebel |
| 9 | Lagerung |
| 9' | Lagerzapfen |
| 10 | Ende |
| 11 | Anschlagteil |
| 12 | Mittelachse |
| 13 | Gewindespindel |
| 14 | Gewinde |
| 15 | Mutter |
| 16 | Lagerteil |
| 17 | Lagerzapfen |
| 18 | Gestängeteil |
| 19 | Federteller |
| 20 | Lagerzapfen |
| 21 | Innenflansch |
| 22 | Vorspannfeder |
| 23 | Innenraum |
| 24 | Kupplungsflansch |
| 25 | Kupplungsfläche |
| 26 | Flansch |
| 27 | Kupplungsfläche |
| 25, 27 | Dreh- und Axialkupplung |
| 28 | Anschlagkupplung |
| 29 | Steuerglied |
| 30 | Anschlagkupplung |
| 31 | Dichtring |
| 32 | Ringspalt |
| 33 | Faltenbalg |
| 34 | Flansch |
| 35 | Flansch |
| 36 | Steuerfeder |
| 37 | Drehlager |
| 38 | Axialspiel |
| 39 | Sechskantansatz |
| 40 | Zahn |
| 41 | Feder |
| 42 | Bremszylindergehäuse |
| 43 | Rückstellfeder |
| 44 | Bremskolben |
| 45 | Gestängeteil |
| 46 | Gewinde |
| 47 | Gewindespindel |
| 48 | Innenraum |
| 49 | Federteller |
| 50 | Vorspannfeder |
| 51 | Gehäuse |
| 52 | Kolbenstangenkopf |
| 53 | Mutter |
| 54 | Flansch |
| 55 | Kupplungsfläche |
| 56 | Kupplungsflansch |
| 57 | Kupplungsfläche |
| 58 | Sicherungsring |
| 59 | Drehlager |
| 60 | Ende |
| 60/59 | Anschlag |
| 61 | Hebel |
| 62 | Steuerfeder |
| 63 | Längsschlitz |
| 64 | Längsschlitz |
| 65 | Anschlag |
| 66 | Anschlagmutter |
| 67 | Ende |
| 68 | Längsschlitzende |
| A | Abstand |

## Patentansprüche

1. Selbsttätige, sofortwirkende Nachstellvorrichtung (6) für den Anlegehub von Bremsgestängen (2, 4; 52, 44) von insbesondere Schienenfahrzeugen, mit zwei über ein selbsthemmungsfreies Gewinde (14; 46) miteinander verschraubten, spindel- bzw. mutterartig ausgebildeten Verschraubungsteilen (13, 15; 47, 53), die in dem durch die Nachstellvorrichtung geleiteten Bremskraftfluss angeordnet sind, und deren erstes Verschraubungsteil (13, 47) mittel- oder unmittelbar mit dem Bremsgestänge (2; 52) zur einen Seite der Nachstellvorrichtung (6) verbunden und deren zweites Verschraubungsteil (15; 53) um zumindest einen Kupplungshub axialverschieblich und drehbar an einem mit dem Bremsgestänge (4; 44) zur anderen Seite der Nachstellvorrichtung (6) verbundenen Gestängeteil (18; 45) gehalten ist, wobei das zweite Verschraubungsteil (15; 53) in Bremskraftrichtung über ein Drehlager (37; 59) gegen das Gestängeteil (18, 45) abgestützt ist und wobei zwischen das erste Verschraubungsteil (13; 47) und das Gestängeteil (18; 45) eine Vorspannfeder (22; 50) eingespannt ist, die diese beiden Teile entgegen ihrer Belastungsrichtung durch die Bremskraft gegeneinander verspannt, mit einer von der Bremskraft durchsetzbaren und unter Bremskraftbelastung geschlossenen, kombinierten Dreh- und Axialkupplung (25; 27; 55, 57) zwischen dem zweiten Verschraubungsteil (15; 53) und dem Gestängeteil (18; 45), und mit einem im Lösezustand ein dem Soll-Anlegehub entsprechendes Anschlagspiel (A) aufweisenden Steuerglied (29; 60), das entgegen der Kraft einer am Gestängeteil (18; 45) abgestützten Steuerfeder (36; 62) relativverschieblich zum Gestängeteil (18; 45) gelagert ist, wobei die Steuerfeder (36; 62) über das Steuerglied (29; 60) und eine diesem nachgeordnete Anschlagkupplung (30; 60/59) eine Drehkupplung für das zweite Verschraubungsteil (15; 53) in Schliessrichtung belastet, dadurch gekennzeichnet, dass die Drehkupplung und die kombinierte Dreh- und Axialkupplung (25, 27; 55, 57) zu einer Kupplung zusammengefasst sind, dass die Anschlagkupplung (30; 60/59) zwischen dem Steuerglied (29; 45) und dem zweiten Verschraubungsteil (15; 53) angeordnet ist, dass die Steuerfeder (36; 62) kräftiger als die Vorspannfeder (22; 50) bemessen ist, und dass ein nach Überwinden des Soll-Anlegehubes das Steuerglied (29; 60) rascher als das Gestängeteil (18; 45) in dessen Bewegungsrichtung beim Bremsen verschiebender Übersetzungshebel (8; 61) vorgesehen ist.

2. Nachstellvorrichtung nach Anspruch 1, dadurch gekennzeichnet, dass das Gestängeteil (18; 45) einen Teil des spindelartigen, ersten Verschraubungsteiles (13; 47) übergreifend rohrartig ausgebildet ist, dass die Vorspannfeder (22; 50) zwischen einem am im Gestangeteil (18; 45) befindlichen Ende des ersten Verschraubungsteiles (13; 47) angeordneten Federteller (19; 49) und einem Innenflansch (21; 44) des Gestängeteiles (18; 45) eingespannt ist, dass das Gestängeteil (18; 45) das zweite, mutterartige Verschraubungsteil (15; 53) teilweise übergreifend mit einem eingezogenen Kupplungsflansch (24; 56) mit der Kupplung (25, 27; 55, 57) zugehörender Kegelkupplungsfläche (25; 57) endet, dass das zweite Verschraubungsteil (15; 53) einen Anschlagflansch (28; 58) aufweist, an welchem unter Bildung der Anschlagkupplung (30; 60/59) das Steuerglied (29; 60) unter der Kraft der Steuerfeder (36; 62) anliegt.

3. Nachstellvorrichtung nach Anspruch 2, dadurch gekennzeichnet, dass die Vorspannfeder (22) das erste Verschraubungsteil (13) in Richtung eines Hineinziehens in das Gestängeteil (18) belastet, dass die Kegelkupplungsfläche (25) dem Innenraum (23) des Gestängeteiles (18) zugewandt ist und einer Kupplungsfläche (27) am zweiten Verschraubungsteil (15) gegenübersteht, dass der Anschlagflansch (28) sich ausserhalb des Gestängeteiles (18) befindet, dass das Steuerglied (29) rohrartig ausgebildet und axialverschieblich auf dem Gestängeteil (18) gelagert ist und von seiten des Gestängeteils (18) am Anschlagflansch (28) anliegt, und dass das Drehlager (37) zwischen dem Kupplungsflansch (24) und dem Anschlagflansch (28) mit wenigstens einem Schalthub entsprechenden, axialen Spiel (38) angeordnet ist (Fig. 2, 3).

4. Nachstellvorrichtung nach Anspruch 3, dadurch gekennzeichnet, dass die Kupplung (25, 27) als verzahnte (40) Konuskupplung ausgebildet ist und dass das axialverschieblich auf dem zweiten Verschraubungsteil (15) gelagerte Drehlager (37) von einer Feder (41), die schwächer als die Vorspannfeder (22) ist, gegen den Kupplungsflansch (24) gedrückt wird (Fig. 3).

5. Nachstellvorrichtung nach Anspruch 3, dadurch gekennzeichnet, dass die Anschlagkupplung (30) als verzahnte Drehkupplung ausgebildet ist (Fig. 5) und dass das Steuerglied (29) undrehbar gehalten ist.

6. Nachstellvorrichtung nach Anspruch 2, dadurch gekennzeichnet, dass die Vorspannfeder (50) das erste Verschraubungsteil (47) in Richtung eines Hinausdrückens aus dem Gestängeteil (45) belastet, dass die Kupplungsfläche (57) dem Innenraum (48) des Gestängeteils (45) abgewandt ist und einer Kupplungsfläche (55) am zweiten Verschraubungsteil (53) gegenübersteht, dass der Anschlagflansch (58) sich innerhalb des Gestängeteiles (45) befindet und dass das Steuerglied als radialinneres Ende (60) wenigstens eines Hebels (61) ausgebildet ist, das von der sich andererseits am Kupplungsflansch (56) abstützenden Steuerfeder (62) belastet ist, wobei sich der Hebel (61) vom zweiten Verschraubungsteil (53) nach radialaussen erstreckt, eine Öffnung (64) im Gestängeteil (45), von diesem unter Bilden einer Drehstelle abstützbar durchragt und sich mit seinem radialäusseren Ende (67) mit dem Soll-Anlegehub entsprechenden achsparallelen Abstand (A) vor einem fest einstellbaren Steueranschlag (65) befindet (Fig. 4).

7. Nachstellvorrichtung nach Anspruch 6, dadurch gekennzeichnet, dass das Drehlager (59) zwischen dem radialinneren Ende (60) des Hebels (61) und dem Anschlagflansch (58) eingeordnet ist.

## Claims

1. Automatic instant slack adjuster (6) for the application stroke of brake linkages (2, 4; 52, 44), especially of railway cars, comprising two spindle or nut-like screw parts (13, 15; 47, 53) which are screwed together via a non-self-locking thread (14; 46) and which are positioned in the brake force flow passing through the slack adjuster (6), the first screw part (13, 47) being linked directly or indirectly to the brake linkage (2; 52) at one side of the slack adjuster (6) and the second screw part (15; 53) being axially movable by at least one clutch stroke and rotatable on a linkage part (18; 45) connected to the brake linkage (4; 44) at the other side of the slack adjuster (6), the second screw part (15; 53) being supported in the direction of braking force by the linkage part (18, 45) via a pivot bearing (37; 59) and a preloading spring (22, 50) being clamped between the first screw part (13; 47) and the linkage part (18; 45), which spring (22, 50) braces these two parts against one another in the direction opposite to the load exerted by the braking force; comprising a combined rotary and axial clutch (25; 27; 55, 57) through which the braking force can pass, which is closed under the load of the braking force, and which is positioned between the second screw part (15; 53) and the linkage part (18; 45); and comprising a control member (29; 60) having a stop clearance (A) corresponding in the release condition to the desired application stroke, which control member (29; 60) is mounted so as to be capable of movement relative to the linkage part (18; 45) against the force of a control spring (36; 62) supported by the linkage part (18; 45), a rotary clutch for the second screw part (15; 53) being loaded in the closing direction by the said control spring (36; 62) via the control member (29; 60) and via a stop clutch (30; 60/59) arranged after the control member, wherein the rotary clutch and the combined rotary and axial clutch (25, 27; 55, 57) are made to form one clutch, wherein the stop clutch (30; 60/59) is positioned between the control member (29; 45) and the second screw part (15; 53), wherein the control spring (36; 62) is stronger than the preloading spring (22; 50), and wherein there is a transmission lever (8; 61)

which, after overcoming the desired application stroke, shifts the control member (29; 60) faster than the linkage part (18; 45) in its direction of movement during brake application.

2. Slack adjuster as defined in Claim 1, wherein the linkage part (18; 45) is designed like a tube overlapping part of the spindle like, firstscrew part (13; 47), wherein the preloading spring (22; 50) is clamped between a spring retainer (19; 49) arranged at that end of the first screw part (13; 47) that is located in the linkage part (18; 45), and an inner flange (21; 44) of the linkage part (18; 45), wherein the linkage part (18; 45) ends, while partly overlapping the second nut-like screw part (15; 53), with a retracted clutch flange (24; 56) having a tapered clutch surface (25; 57) belonging to the clutch (25, 27; 55, 57), wherein the second screw part (15; 53) has a stop flange (28; 58) on which the control member (29; 60) rests under the force of the control spring (36; 62) while forming the stop clutch (30; 60/59).

3. Slack adjuster as defined in Claim 2, wherein the preloading spring (22) loads the first screw part (13) in the direction of retraction into the linkage part (18), wherein the tapered clutch surface (25) faces the inside (23) of the linkage part (18) and is opposite a clutch surface (27) on the second screw part (15), wherein the stop flange (28) is positioned outside the linkage part (18), wherein the control member (29) is designed like a tube and is mounted so as to be axially movable on the linkage part (18) and rests on the stop flange (28) at the same side as the linkage part (18), and wherein the pivot bearing (37) is arranged between the clutch flange (24) and the stop flange (28) with an axial clearance (38) corresponding to at least one operating stroke (Fig. 2, 3).

4. Slack adjuster as defined in Claim 3, wherein the clutch (25, 27) is designed as a toothed (40) cone clutch and wherein the pivot bearing (37), which is mounted in axially movable fashion on the second screw part (15), is forced against the clutch flange (24) by a spring (41) which is weaker than the preloading spring (22) (Fig. 3).

5. Slack adjuster as defined in Claim 3, wherein the stop clutch (30) is designed as a toothed rotary clutch (Fig. 5) and wherein the control member (29) is held so that it cannot turn.

6. Slack adjuster as defined in Claim 2, wherein the preloading spring (50) loads the first screw part (47) in the direction of extraction from the linkage part (45), wherein the clutch surface (57) faces away from the inside (48) of the linkage part (45) and is opposite a clutch surface (55) on the second screw part (53), wherein the stop flange (58) is located inside the linkage part (45) and wherein the control member is designed as the radially inner end (60) of at least one lever (61), which end (60) is loaded by the control spring (62) which is supported in turn by the clutch flange (56), the lever (61) extending radially outwards from the second screw part (53) passing through an opening (64) in the linkage part (45) while being supportable by the said linkage part (45) while forming a pivot, and being positioned with its radially outer end (67) at an axially parallel distance (A) away from a permanently adjustable control stop (65) that corresponds to the desired application stroke (Fig. 4).

7. Slack adjuster as defined in Claim 6, wherein the pivot bearing (59) is positioned between the radially inner end (60) of the lever (61) and the stop flange (58).

**Revendications**

1. Dispositif automatique et à action instantanée de rattrapage de jeu pour la course d'application de timoneries de freins (6) en particulier de véhicules sur rails, avec deux éléments de vissage (13, 15; 47, 53), réalisés sous la forme d'une broche et d'un écrou, vissés entre eux par l'intermédiaire d'un filetage automatiquement non autobloquant (14; 16) et disposés dans la voie de transmission du flux des forces de freinage passant par le dispositif de rattrapage de jeu, et dont le premier élément de vissage (13, 47) est relié, indirectement ou directement, à la timonerie de frein (2; 52), d'un côté du dispositif de rattrapage de jeu (6) alors que le second élément de vissage (15; 53) est porté par un élément de tringlerie (18; 45) relié à l'autre côté du dispositif de rattrapage de jeu (6) de manière à pouvoir être déplacé axialement sur au moins une course d'accouplement et à pouvoir tourner, la réalisation étant telle que le second élément de vissage (15; 53) prend appui, dans le sens de la force de freinage, contre l'élément de tringlerie (18, 45), par l'intermédiaire d'un palier (37; 59), qu'entre le premier élément de vissage (13; 47) et l'élément de tringlerie (18; 45) est prévu un ressort de préarmement (22; 50) qui serre ces deux éléments entre eux, dans le sens opposé à celui de leur charge par la force de freinage, à l'aide d'un accouplement combiné à action de rotation et à action axiale (25, 27; 55, 57), qui est traversé par la force de freinage et qui est fermé sous la charge de la force de freinage et qui est disposé entre le second élément de vissage (15; 53) et l'élément de tringlerie (18; 45), et avec un élément de commande (29; 60) qui présente à l'état de desserrage un jeu de butée (A) correspondant à la course d'application de consigne, et qui est monté à déplacement relatif par rapport à l'élément de timonerie (18; 45), à l'encontre de la force d'un ressort de commande (36; 62) qui prend appui contre l'élément de tringlerie (18; 45), lequel ressort de commande (36; 62) charge, par l'intermédiaire de l'élément de commande (29; 60) et d'un accouplement de butée (30; 60/59), dans son sens de fermeture, un accouplement de rotation pour le second élément de vissage (15; 53), caractérisé par le fait que l'accouplement de rotation et l'accouplement combiné à action de rotation et à action axiale (25, 27; 55, 57) sont rassemblés en un seul accouplement, que l'accouplement de butée (30; 60/59) est disposé entre l'élément de commande (29; 45) et le second élément de vissage (15; 53), que le ressort de commande (36; 62) est plus fort que le ressort de préarmement (22; 50), et qu'il est prévu un levier de transmission (8; 61) qui, après qu'est surmontée la course d'application de consigne, déplace l'élément de commande (29; 60) plus rapidement que l'élément de timonerie (18; 45), dans son sens de déplacement, lors du freinage.

2. Dispositif de rattrapage de jeu selon la revendication 1, caractérisé par le fait que l'élément de tringlerie (18; 45) est réalisé sous la forme d'un tube qui passe sur une partie du premier élément de vissage (13; 47) qui se présente sous la forme d'une broche, que le ressort de préarmement (22; 50) est armé entre une coupelle de ressort (19; 49) agencée à une extrémité, située dans l'élément de tringlerie (18; 45), du premier élément de vissage (13; 47) et un flasque intérieur (21; 44) de l'élément de tringlerie (18; 45), que l'élément de tringlerie (18; 45) tout en entourant en partie, par un flasque d'accouplement monté (24; 56), le second élément de vissage (15; 53) réalisé sous la forme d'un écrou, se termine par une surface d'accouplement (25; 57) appartenant à l'accouplement (25, 27; 55, 57), que le second élément de vissage (15; 53) comporte un flasque de butée (28; 58) contre lequel porte, avec formation de l'accouplement de butée (30; 60/59), l'élément de commande (29; 60), sous la force du ressort de commande (36; 62).

3. Dispositif de rattrapage de jeu selon la revendication 2, caractérisé par le fait que le ressort de préarmement (22) charge le premier élément de vissage (13) dans le sens de sa pénétration dans l'élément de tringlerie (18), que la surface conique d'accouplement (25) est tournée du côté de l'espace intérieur (23) de l'élément de tringlerie (18) et se situe en face d'une surface d'accouplement (27) prévue sur le second élément de vissage (15), que le flasque de butée (28) se situe en dehors de l'élément de tringlerie (18), que l'élément de commande (29) est réalisé sous la forme d'un tube, est déplaçable axialement sur l'élément de tringlerie (18) et porte du côté de l'élément de tringlerie (18) contre le flasque de butée (28), et que le palier (37) est disposé entre le flasque d'accouplement (24) et le flasque de butée (28) avec un jeu axial (38) qui correspond au moins à une course de commutation (figures 2, 3).

4. Dispositif de rattrapage de jeu selon la revendication 3, caractérisé par le fait que l'accouplement (25, 27) est réalisé sous la forme d'un accouplement conique denté (40) et que le palier (37) qui est monté, en déplacement axial, sur le second élément de vissage (15), est pressé contre le flasque d'accouplement (24) par un ressort (41) qui est plus faible que le ressort de préarmement (22) (figure 3).

5. Dispositif de rattrapage de jeu selon la revendication 3, caractérisé par le fait que l'accouplement de butée (13) est réalisé sous la forme d'un accouplement de rotation denté (figure 5), et que l'élément de commande (29) est maintenu de façon à ne pas pouvoir tourner.

6. Dispositif de rattrapage de jeu selon la revendication 2, caractérisé par le fait que le ressort de préarmement (50) charge le premier élément de vissage (47) dans le sens du refoulement hors de l'élément de tringlerie (45), que la surface d'accouplement (57) est tournée du côté opposé à l'espace intérieur (48) de l'élément de tringlerie (47) et se trouve en face d'une surface d'accouplement (55) prévue sur le second élément de vissage (53), que le flasque de butée (58) se situe à l'intérieur de l'élément de tringlerie (45) et que l'élément de commande est réalisé selon l'extrémité radialement intérieure (60) d'au moins un levier (61) qui est chargé par le ressort de commande (62) qui prend appui, d'autre part, sur le flasque d'accouplement (56), la réalisation étant telle que le levier (61) s'étend radialement vers l'extérieur à partir du second élément de vissage (53), passe par une ouverture (64) ménagée dans l'élément de tringlerie (45) en étant en appui sur ce dernier, avec formation d'un point de rotation et que son extrémité radialement extérieure (67) se situe à l'avant d'une butée de commande réglable de façon fixe (65), à une distance (A) qui est parallèle à l'axe et qui correspond à la course d'application de consigne (figure 4).

7. Dispositif de rattrapage de jeu selon la revendication 6, caractérisé par le fait que le palier (59) est disposé entre l'extrémité radialement intérieure (60) du levier (61) et le flasque de butée (58).

Fig.1

Betätigung

*Fig. 3*

*Fig. 2*

Radiale Rückstellung

# Fig. 4

verstellbarer Anschlag

# Fig. 5

0 121 815